# EUROPEAN PATENT APPLICATION

(11) **EP 1 739 896 A1**
(43) Date of publication of application: **03.01.2007**
(21) Application number: 05292805.8
(22) Date of filing: 27.12.2005
(51) Int. Cl.: H04L 12/56

(54) **Traffic control between a base station and a radio network controller**

(30) Priority: 30.06.2005 US 169948
(71) Applicant: Nortel Networks Limited, St.Laurent, Quebec H4S 2A9 (CA)
(72) Inventor: Gruet, Christophe, 78990 Elancourt (FR); Georgeaux, Eric, 78180 Montigny le Bretonneux (FR); Massie, Bastien, 78720 La Celle les Bordes (FR); Cavagna, Jean-Marc, 78120 Rambouillet (FR)
(74) Representative: Attali, Pascal

(57) **Abstract**

Method for controlling traffic over an interface (1;21) between a base station (2;20) and a radio network controller (3;22) of a radiocommunication system, the base station being arranged for receiving information from terminals (4;15-17) over radio channels and for forwarding said information to the radio network controller over said interface through at least one buffer (14) having a limited size. According to the method, a level of traffic on said interface is estimated and the quantity of information forwarded to the radio network controller over said interface is varied according to the traffic level estimate.

## Description

The present invention relates to traffic control on an interface between a base station and a radio network controller of a radiocommunication system.

When applied to a UMTS ("Universal Mobile Telecommunication System") network for instance, the interface in question is the one called lub. But, of course, the invention can apply to other interfaces in different radiocommunication systems as well.

In the uplink direction, a base station generally receives information from terminals over radio channels. Such information is incorporated in frames which are forwarded to a radio network controller by the base station over an appropriate interface.

Before being really sent to the radio network controller, the frames are inputted into a buffer having a limited size.

The same occurs in the downlink direction, where the radio network controller receives information from a core network before forwarding it to the base station over said interface. Here again, the information is incorporated in frames which are inputted into a buffer having a limited size, before being really sent to the base station.

If the buffer of the base station or of the radio network controller is full, which means that there is congestion on the interface, it cannot receive new frames which are thus lost.

Therefore, there is a need for limiting the congestion situations on such interface.

An object of the present invention is thus to limit the congestion situations on an interface between a base station and a radio network controller, i.e. to better control traffic sent over such interface.

The invention proposes a method for controlling traffic over an interface between a base station and a radio network controller of a radiocommunication system, the base station being arranged for receiving information from terminals over radio channels and for forwarding said information to the radio network controller over said interface through at least one buffer having a limited size. The method comprises the following steps :
- estimating a level of traffic on said interface; and
- varying the quantity of information forwarded to the radio network controller over said interface according to the traffic level estimate.

The quantity of information transmitted to the radio network controller over said interface being set according to the traffic level estimate, it is thus possible to reduce the traffic sent by the base station to the radio network controller over said interface when the traffic level estimate is relatively high. By contrast, the traffic can keep on being fully sent by the base station to the radio network controller over said interface when the traffic level estimate is relatively low.

The base station can comprise a traffic manager and at least one processing unit arranged for receiving information from terminals. In this case, the level of traffic on said interface is estimated and transmitted to the at least one processing unit by the traffic manager. Advantageously, the quantity of information forwarded to the radio network controller over said interface can be varied by the at least one processing unit.

The information received from terminals can be incorporated in frames, e.g. by the base station, each frame comprising a useful part and a respective error indication. Advantageously, the quantity of information forwarded to the radio network controller over said interface can thus be varied by taking account of the error indication of at least some of said frames. For instance, at least the useful part of at least some of the frames whose error indication indicates that the corresponding frame is erroneous is not forwarded to the radio network controller over said interface when the traffic level estimate is above a determined threshold. If this is not sufficient, the error indication of some non-erroneous frames could be changed to indicate that the corresponding frame is erroneous, so as to limit further the quantity of information forwarded.

Advantageously, the quantity of information forwarded to the radio network controller over said interface can be varied by taking account of a type of service and/or subscription within the framework of which the information is received from terminals. In this way, information related to communications with high priority or particularly sensitive to delay can be forwarded with priority.

In a particular embodiment of the invention, the base station is arranged for granting uplink communication resources to the terminals and the quantity of information forwarded to the radio network controller over said interface is varied by granting a quantity of uplink communication resources to said terminals according to the traffic level estimate. The quantity of information received by the base station can thus be reduced when the traffic level estimate is relatively high. Consequently, the quantity of information forwarded over the interface is reduced as well.

The invention also proposes a method for controlling traffic over an interface between a base station and a radio network controller of a radiocommunication system, the radio network controller being arranged for receiving information from a core network and for forwarding said information to the base station over said interface through at least one buffer having a limited size. The method comprising the following steps :
- estimating a level of traffic on said interface; and
- varying the quantity of information forwarded to the base station over said interface according to the traffic level estimate.

This method is similar to the preceding one, but it applies to the downlink direction, i.e. from the radio network controller to the base station. The same principles can apply to this direction in an appropriate way.

The invention also proposes a base station having an interface with a radio network controller in a radiocommunication system. The base station comprises :
- means for receiving information from terminals over radio channels;
- means for forwarding said information to the radio network controller over said interface through at least one buffer having a limited size;
- means for estimating a level of traffic on said interface; and
- means for varying the quantity of information forwarded to the radio network controller over said interface according to the traffic level estimate.

The invention also proposes a radio network controller having an interface with a base station in a radiocommunication system. The radio network controller comprises :
- means for receiving information from a core network;
- means for forwarding said information to the base station over said interface through at least one buffer having a limited size;
- means for estimating a level of traffic on said interface; and
- means for varying the quantity of information forwarded to the base station over said interface according to the traffic level estimate.

The preferred features of the above aspects which are indicated by the dependent claims may be combined as appropriate, and may be combined with any of the above aspects of the invention, as would be apparent to a person skilled in the art.
- FIG.1 is an example of a schematic architecture of a radiocommunication system in which the invention can take place ;
- FIG.2 is another example of a schematic architecture of a radiocommunication system in which the invention can take place ;
- FIG.3 illustrates a particular embodiment of the invention.

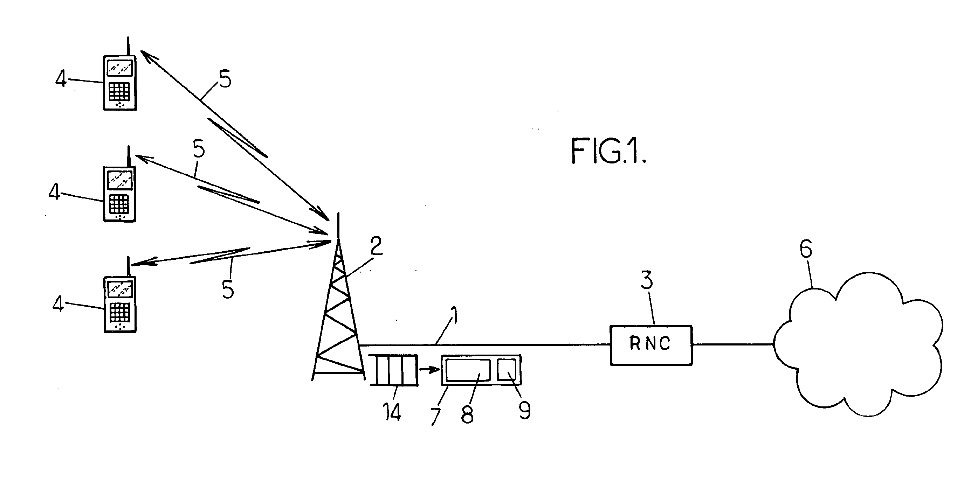

FIG.1 shows a base station 2 having an interface 1 with a radio controller network (RNC) 3. The base station 2 and the RNC 3 can be part of a UMTS network for instance. In this case, the interface 1 is the lub interface as defined in the UMTS standards. Of course, the base station 2 and the RNC 3 could be part of any other radiocommunication system as well, like GSM ("Global System for Mobile communications") for instance.

The base station 2 can receive information from terminals 4 over uplink radio channels of radio interfaces 5. The same interfaces 5 can also carry downlink radio channels for transmitting information from the base station 2 to the terminals 4. As well known in the art, the radio channels can be dedicated to a particular terminal or common to a plurality of terminals. The information transmitted over the radio channels can comprise signaling and/or traffic which can be of the circuit switched (CS) type, e.g. for transporting voice, or of the packet switched (PS) type, e.g. for transporting data.

The dedicated radio channels are often called DCHs ("Dedicated Channels"). As far as the uplink is concerned, another type of radio channels called E-DCHs ("Enhanced - Dedicated Channels") has been recently defined in the UMTS system. In particular, the E-DCHs are described in the technical specification TS 25.309 V6.3.0, "FDD Enhanced Uplink; Overall description; Stage 2 (Release 6)", published in June 2005, by the 3GPP (3rd Generation Partnership Project). The E-DCHs are more particularly designed to carry PS traffic.

The information received from the terminals 4 by the base station 2 over uplink radio channels is then incorporated into frames, so as to be forwarded over the interface 1. Each frame 7 sent over the interface 1 can thus comprise a useful part 8 relating to the information sent by the terminals 4, as well as an error indication 9, such as a CRC (Cyclic Redundancy Code) indicator. Schematically, the CRC indicator is a single bit which gives an indication of whether the content of the useful part 8 of the frame 7 is correct or erroneous. The CRC indicator may be obtained by comparing a CRC code calculated by the base station 2 with a CRC code transmitted by a terminal 4.

Of course, the CRC indicator is only one example of an error indication. Other error indications could be transmitted within corresponding frames and could be used, as will be described below, for determining the frames to be forwarded over the interface 1. As an illustration, a SIR (Signal-to-Interferer Ratio) value could represent an alternate error indication. Any other quality estimate could be used as an error indication as well.

In a typical example, the frames 7 are transmitted by the base station 2 over the interface 1 inside ATM ("Asynchronous Transfer Mode") cells. They are then received by the RNC 3 which, in turn, can forward their content to the core network 6 in an appropriate format, in view of reaching the final recipient. The core network 6 can be the fixed part of the radiocommunication network, the base station 2 and the RNC 3 belong to, and/or it can comprise a network, such as the PSTN ("Public Switched Telephone Network"), a packet data network, a private network, etc.

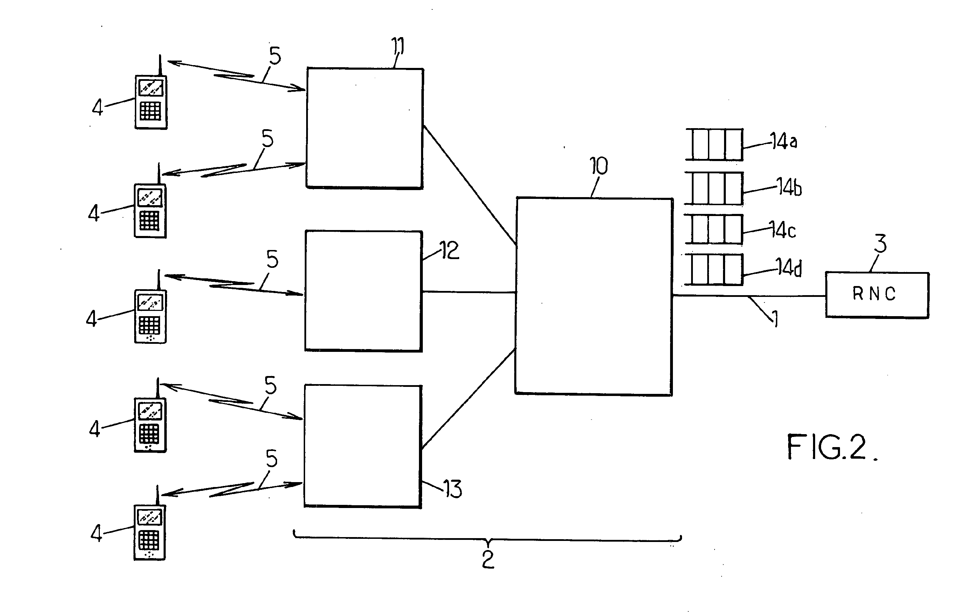

FIG.2 gives another representation of an architecture in which the invention can take place. The elements common with FIG.1 are numbered the same. Here, the base station 2 is divided into several modules. Among these modules, there is a traffic manager 10 arranged for controlling traffic over the interface 1. The other represented modules 11-13 are processing units of the base station 2 capable of communicating with the terminals 4 over radio channels of radio interfaces 5.

In particular, the traffic manager 10 inputs the frames received from the processing units 11-13 into buffers in view of their transmission to the RNC 3 over the interface 1. By contrast with FIG.1, several buffers 14a-14d have been represented here. Advantageously, the buffers can each be fed with information of different types. For example, the information received by the processing units 11-13 of the base station 2 can be sent by the terminals 4 within the framework of a particular service and/or a particular subscription.

Different classes of services and/or subscriptions can be defined. As for the services, the classes could correspond to their sensitivity to delay : for instance, a voice call cannot bear any substantial delay, whereas interactive background services i.e. non real-time services (e-mail, Web, etc.) can. Similarly, the classes could correspond to the priorities conferred by the subscriptions of the users of the terminals 4. Thus, each frame outputted from the traffic manager 10 could be put into one of the buffers 14a-14d depending on such classes.

The traffic manager 10 is also capable of estimating the level of traffic on the interface 1, i.e. a load on said interface. This level of traffic concerns the uplink direction, i.e. from the base station 2 to the RNC 3.

This can be achieved by monitoring the occupation of each buffer 14a-14d. The traffic level estimate can be an absolute level or a relative level, e.g. compared to a determined load level. The estimation can be made periodically, as an instantaneous measurement or by averaging a plurality of successive measurements.

In a very simple example, the traffic manager 10 can only determine whether there is congestion on the interface 1. Alternatively, it can determine in what category among at least two predetermined categories, the traffic level on the interface 1 is. For instance, three categories could be defined : a first category said "green" would indicate that there is no risk of congestion on the interface 1 in the short term, a second category said "orange" would indicate that there is some risk of congestion on the interface 1 in the short term and a third category said "red" would indicate that there is a high risk of congestion in the short term or there is already congestion on the interface 1. The different categories may be defined with reference to a determined load threshold. For example, the traffic level estimate would be in the green category if it is below 70% of the total load that the interface 1 can support (in uplink), in the orange category if it is between 70% and 80% of said total load, and in the red category if it is above 80% of said total load. An hysteresis could also be used for the transitions between two categories. Of course, different types of estimates or different categories could suit as well. For example, more than three categories could be defined to qualify the traffic level on the interface 1.

As for the processing units 11-13, they process radio signals received from terminals 4. Typical operations performed by the processing units 11-13 can include an inverse filtering, a carrier transposition and/or a digitization as will be appreciated by one skilled in the art. They can also include digital processing, like despreading, demodulating, demultiplexing and/or decoding the information received from the terminals 4 as well known in the art. The processing units 11-13 are also in charge of building the above mentioned frames that will be sent to the traffic manager 10 in view of their transmission over the interface 1.

It can be noted that the processing units 11-13 could all act in the same way or differently. As an example, the processing units 11 and 12 could be used for processing information received from terminals 4 over DCHs, whereas the processing unit 13 could be used for processing information received from terminals 4 over E-DCHs.

Of course, the architecture of the base station 2 as illustrated in FIG.2 is only an example. Other architectures could be suitable as well. Moreover, the operations performed and the sharing of responsibilities between the processing units 11-13 and the traffic manager 10 could be different as well, provided that they allow the incorporation of the information received from the terminals 4 in frames to be transmitted over the interface 1.

According to the invention, the quantity of information forwarded to the RNC 3 over the interface 1 is varied according to the level of traffic on the interface 1 as estimated by the base station 2. In other words, the number of frames transmitted over the interface 1 by the base station 2 depends on the traffic level estimate. Different processing methods can be implemented by the base station 2, in order to vary the number of frames transmitted over the interface 1.

According to a first embodiment of the invention, all the information received by the base station 2 from terminals 4 over DCHs are incorporated in frames 7, but only some or part of some frames are forwarded over the interface 1 by the base station. In a very simple example, only a limited percentage of the frames could be sent over the interface 1, said percentage depending on the traffic level estimate.

Preferably, the transmission of the frames over the interface 1 takes account of the CRC indicator 9 (or any other error indication) they each include. Therefore, depending on the traffic level estimate, it could be decided that all or some of the frames 7 having a CRC indicator set to the value corresponding to erroneous frame are discarded, whereas the other frames 7 are forwarded over the interface 1.

Alternatively, it could be decided that only the useful part 8 of all or some of the frames 7 having a CRC indicator set to the value corresponding to erroneous frame is discarded, the CRC indicator of all the frames 7 (correct or erroneous) being transmitted over the interface 1. These measures should preferably be taken when the traffic level estimate reveals that there is some congestion or that there is a risk of congestion in the short term over the interface 1. Of course, when, according to the traffic level estimate, the load on the interface 1 is low, all the frames 1 could be forwarded over the interface 1.

When using the traffic level estimate with three values (green, orange, red) as mentioned above, this embodiment could thus be so that all the frames 7 are forwarded over the interface 1 when the traffic level estimate is green, only the non-erroneous frames 7 and the CRC indicator 9 (or any other error indication) of the erroneous frames 7 are forwarded over the interface 1 when the traffic level estimate is orange, and only non-erroneous frames 7 are forwarded over the interface 1 when the traffic level estimate is red. Of course, other schemes are also possible.

When the traffic level estimate reveals a high congestion situation on the interface 1, the base station 2 could further modify the CRC indicator of some correct frames 7 on its own, so that said frames are presented as erroneous frames. Therefore, these frames or their useful part will be discarded when carrying out the above mentioned method. This further limits the quantity of information forwarded over the interface 1, and thus further reduces the congestion on this interface.

A statistical parameter can be calculated based on the value of the CRC indicator 9 of all the frames transmitted over the interface 1. This parameter can be the BLER ("BLock Error Rate") parameter as well known in the art. The proportion of erroneous frames 7 discarded by the base station 2 will imply a corresponding increase of the BLER.

It is possible to set a BLER threshold that should not be exceeded. The quantity of frames discarded is limited by this BLER threshold. It is further possible to discard frames depending on the initial BLER of the communication within the framework of which said frames are transmitted. For example, frames sent by a first terminal within the framework of a communication having an initial BLER of 0% could be discarded in priority compared to frames sent by a second terminal within the framework of a communication having an initial BLER of 7%, in order to reach a total BLER lower than or equal to a BLER threshold of 10% for instance.

Advantageously, the frames (or part of the frames) are discarded or forwarded over the interface 1 depending on the above mentioned class of service and/or subscription within the framework of which the information they carry is received from terminals 4. In this way, it is possible to forward frames containing delay sensitive information with priority and to discard frames containing delay insensitive information with priority for instance. Thus, the occupation in buffers 14a-14d of FIG.2 can be decreased in a non uniform way, depending on the type of information they receive.

It must be noted that, when the architecture of FIG.2 is used, the traffic level on the interface 1 is estimated by the traffic manager 10. This traffic level estimate is thus advantageously transmitted to the processing units 11-13 by the traffic manager 10, so that the processing units 11-13 can take it into account. Within the framework of the above embodiment, this could allow for example the processing units 11-13 to decide which frames should be transmitted to the traffic manager 10 in view of their transmission over the interface 1, and which frames should not.

The principles described above for the uplink direction can be applied correspondingly to the downlink direction. In this case, the RNC 3 receives information from the core network 6. Such information is forwarded to the base station 2 over the interface 1 through at least one buffer having a limited size. The RNC 3 estimates a level of traffic on the interface 1, for the downlink direction (i.e. from the RNC 3 to the base station 2). It varies the quantity of information forwarded to the base station 2 over the interface 1 according to the traffic level estimate, as described above.

It should be noted that, depending on the system considered, an adaptation could be necessary when applying the above described principles to the downlink direction. For instance, in a UMTS system, the information coming from the RNC 3 does not contain any CRC indicator. Therefore, only unspecific frames could be discarded in downlink, rather than erroneous frames only.

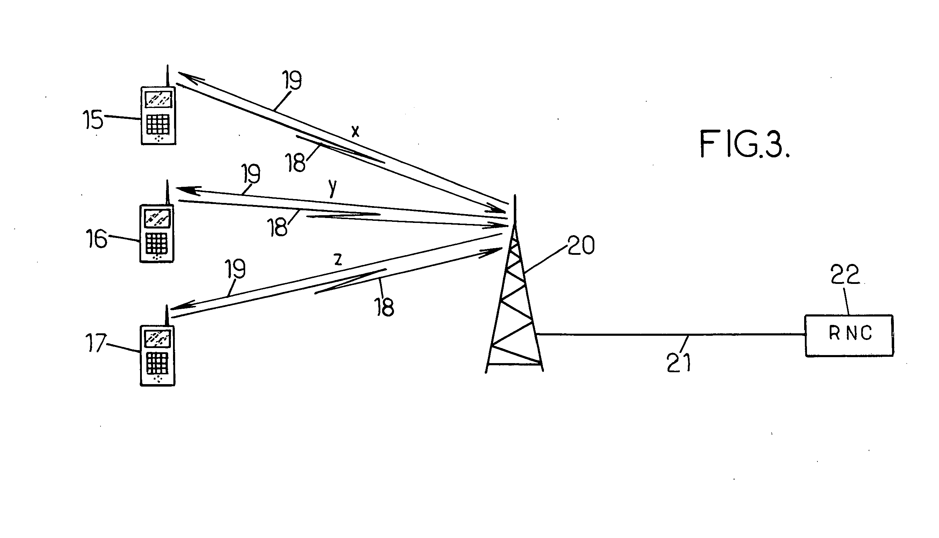

FIG.3 shows another embodiment of the invention, in which the base station 20 is arranged for receiving information from terminals 15-17 over E-DCHs carried by radio interfaces 18, and to forward them to the RNC 22 over the interface 21.

It is reminded that the E-DCHs are more particularly used within the framework of HSUPA ("High Speed Uplink Packet Access") feature. An E-DCH supports HARQ ("Hybrid Automatic Repeat reQuest"), adaptive modulation and coding, and base station scheduling of the uplink data transmissions. At the MAC ("Medium Access Control") level, a new MAC termination point, the MAC-e, has been introduced in the radio network architecture, and more specifically at the base station level.

The base station includes an E-DCH scheduler which manages E-DCH resources between the terminals. Based on scheduling requests, scheduling assignments are determined and transmitted. Uplink communication resources are granted to the terminals by the base station. This is achieved by sending a scheduling grant to each terminal to indicate the maximum amount of uplink resources it may use. The grants can be sent once per TTI ("Transmission Time Interval"), i.e. typically every 2 or 10 milliseconds. They are set so that the total pool of uplink resources is shared between the terminals. This is fully described in section 9 of the above mentioned TS 25.309.

In the example illustrated in FIG.3, the terminal 15 is granted x kbit/s, the terminal 16 is granted y kbit/s and the terminal 17 is granted z kbit/s for a next transmission time interval.

According to the present embodiment of the invention, the grants x, y and z are set depending on the estimated level of traffic on the interface 21.

It can be noted that when an architecture of the base station as the one represented in FIG.2 is used, the grants are advantageously determined by the processing units. In this case, the traffic manager should thus transmit the traffic level estimate it has calculated to the processing units, so that the grants can be determined.

The traffic level estimate can be as described above. For example, it can take one of three values (green, orange, red) defined according to appropriate thresholds.

If the traffic level estimate is low (green value for instance), the grants x, y and z can take maximum values, so that the maximum quantity of information is transmitted to the base station 20 over the corresponding E-DCHs. The information is then forwarded over the interface 21 by the base station 20 as described above.

If the traffic level estimate becomes significant (orange value for instance), the grants x, y and z are reduced for one or several next transmission time intervals. In this way, the quantity of information transmitted by the terminals 15-17 to the base station 20 is limited, and thus, the traffic level on the interface 21 is reduced accordingly.

If the traffic level estimate is high (red value for instance), the base station 20 can decide to set the grants x, y and z to 0 kbit/s so as to completely stop the uplink transmissions until the congestion situation on the interface 21 has been overcome or alleviated.

Of course, other strategies can be used for adapting the grant values to the traffic level estimate.

More generally, the quantity of information forwarded by a base station to an RNC over their common interface can be varied in any other way, provided that the variation depends on the traffic level estimate.

## Claims

1. A method for controlling traffic over an interface (1;21) between a base station (2;20) and a radio network controller (3;22) of a radiocommunication system, the base station being arranged for receiving information from terminals (4;15-17) over radio channels and for forwarding said information to the radio network controller over said interface through at least one buffer (14) having a limited size, the method comprising the following steps :
- estimating a level of traffic on said interface; and
- varying the quantity of information forwarded to the radio network controller over said interface according to the traffic level estimate.

2. A method as claimed in claim 1, wherein the base station (2) comprises a traffic manager (10) and at least one processing unit (11-13) arranged for receiving information from terminals (4), and wherein the level of traffic on said interface (1) is estimated and transmitted to the at least one processing unit by the traffic manager.

3. A method as claimed in claim 2, wherein the quantity of information forwarded to the radio network controller (3) over said interface (1) is varied by the at least one processing unit (11-13).

4. A method as claimed in any one of the foregoing claims, wherein the information received from terminals (4) is incorporated in frames (7) each comprising a useful part (8) and a respective error indication (9) and wherein the quantity of information forwarded to the radio network controller (3) over said interface (1) is varied by taking account of the error indication of at least some of said frames.

5. A method as claimed in claim 4, wherein at least the useful part (8) of at least some of the frames (7) whose error indication (9) indicates that the corresponding frame is erroneous is not forwarded to the radio network controller (3) over said interface (1) when the traffic level estimate is above a determined threshold.

6. A method as claimed in claim 5, wherein said at least some of the frames (7) whose error indication (9) indicates that the corresponding frame is erroneous are not forwarded to the radio network controller (3) over said interface (1) when the traffic level estimate is above a determined threshold.

7. A method as claimed in claim 5 or 6, wherein the error indication (9) of some non-erroneous frames (7) is changed to indicate that the corresponding frame is erroneous.

8. A method as claimed in any one of the foregoing daims, wherein the quantity of information forwarded to the radio network controller (3;22) over said interface (1;21) is varied by taking account of a type of service and/or subscription within the framework of which the information is received from terminals (4; 15-17).

9. A method as claimed in any one of the foregoing claims, wherein the base station (20) is arranged for granting uplink communication resources to said terminals (15-17) and wherein the quantity of information forwarded to the radio network controller (22) over said interface (21) is varied by granting a quantity of uplink communication resources to said terminals according to the traffic level estimate.

10. A method as claimed in any one of the foregoing claims, wherein traffic level thresholds define at least two categories of traffic and wherein the quantity of information forwarded to the radio network controller over said interface depends on which one of the categories of traffic the traffic level estimate belongs to.

11. A method for controlling traffic over an interface (1;21) between a base station (2;20) and a radio network controller (3;22) of a radiocommunication system, the radio network controller being arranged for receiving information from a core network (6) and for forwarding said information to the base station over said interface through at least one buffer having a limited size, the method comprising the following steps :
- estimating a level of traffic on said interface; and
- varying the quantity of information forwarded to the base station over said interface according to the traffic level estimate.

12. A method as claimed in claim 11, wherein the quantity of information forwarded to the base station (2;20) over said interface (1;21) is varied by taking account of a type of service and/or subscription within the framework of which the information is received from the core network (6).

13. A method as claimed in claim 11 or 12, wherein traffic level thresholds define at least two categories of traffic and wherein the quantity of information forwarded to the base station over said interface depends on which one of the categories of traffic the traffic level estimate belongs to.

14. A base station (2;20) having an interface (1;21) with a radio network controller (3;22) in a radiocommunication system, the base station comprising :
- means for receiving information from terminals (4;15-17) over radio channels;
- means for forwarding said information to the radio network controller over said interface through at least one buffer (14) having a limited size;
- means for estimating a level of traffic on said interface; and
- means for varying the quantity of information forwarded to the radio network controller over said interface according to the traffic level estimate.

15. A base station (2;20) as claimed in claim 14, comprising a traffic manager (10) and at least one processing unit (11-13) arranged for receiving information from terminals (4), and wherein the traffic manager includes said means for estimating a level of traffic on said interface and means for transmitting the traffic level estimate to the at least one processing unit.

16. A base station (2;20) as claimed in claim 15, wherein the at least one processing unit (11-13) includes said means for varying the quantity of information forwarded to the radio network controller (3) over said interface (1) according to the traffic level estimate.

17. A base station (2;20) as claimed in any one of claims 14 to 16, comprising means for incorporating the information received from terminals (4) in frames (7) each comprising a useful part (8) and a respective error indication (9), and wherein the means for varying the quantity of information forwarded to the radio network controller (3) over said interface (1) take account of the error indication of at least some of said frames.

18. A base station (2;20) as claimed in claim 17, wherein the means for varying the quantity of information forwarded to the radio network controller (3;22) over said interface (1;21) are arranged so that at least the useful part (8) of at least some of the frames (7) whose error indication (9) indicates that the corresponding frame is erroneous is not forwarded to the radio network controller over said interface when the traffic level estimate is above a determined threshold.

19. A base station (2;20) as claimed in claim 18, wherein the means for varying the quantity of information forwarded to the radio network controller (3;22) over said interface (1;21) are arranged so that said at least some of the frames (7) whose error indication (9) indicates that the corresponding frame is erroneous are not forwarded to the radio network controller over said interface when the traffic level estimate is above a determined threshold.

20. A base station (2;20) as claimed in claim 18 or 19, comprising means for changing the error indication (9) of some non-erroneous frames (7) to indicate that the corresponding frame is erroneous.

21. A base station (2;20) as claimed in any one of claims 14 to 20, wherein the means for varying the quantity of information forwarded to the radio network controller (3;22) over said interface (1;21) take account of a type of service and/or subscription within the framework of which the information is received from terminals (4;15-17).

22. A base station (2;20) as claimed in any one of claims 14 to 21, wherein the means for varying the quantity of information forwarded to the radio network controller (22) over said interface (21) comprise means for granting a quantity of uplink communication resources to said terminals (15-17) according to the traffic level estimate.

23. A base station (2;20) as claimed in any one of claims 14 to 22, wherein traffic level thresholds define at least two categories of traffic and wherein the means for varying the quantity of information forwarded to the radio network controller over said interface are arranged so that the quantity of information forwarded to the radio network controller over said interface depends on which one of the categories of traffic the traffic level estimate belongs to.

24. A radio network controller (3;22) having an interface with a base station (2;20) in a radiocommunication system, the radio network controller comprising :
- means for receiving information from a core network (6);
- means for forwarding said information to the base station over said interface through at least one buffer having a limited size;
- means for estimating a level of traffic on said interface; and
- means for varying the quantity of information forwarded to the base station over said interface according to the traffic level estimate.

25. A radio network controller (3;22) as claimed in claim 24, wherein the means for varying the quantity of information forwarded to the base station (2;20) over said interface (1;21) take account of a type of service and/or subscription within the framework of which the information is received from the core network (6).

26. A radio network controller (3;22) as claimed in claim 24 or 25, wherein traffic level thresholds define at least two categories of traffic and wherein the means for varying the quantity of information forwarded to the base station over said interface are arranged so that the quantity of information forwarded to the base station over said interface depends on which one of the categories of traffic the traffic level estimate belongs to.
